(19) Europäisches Patentamt
European Patent Office
Office européen des brevets

(11) **EP 4 734 198 A2**

(12) **EUROPEAN PATENT APPLICATION**

(43) Date of publication:
**29.04.2026 Bulletin 2026/18**

(21) Application number: **25193831.2**

(22) Date of filing: **04.08.2025**

(51) International Patent Classification (IPC):
**H01M 10/04** (2006.01)   **H01M 50/209** (2021.01)
**H01M 50/264** (2021.01)   **H01M 50/291** (2021.01)

(52) Cooperative Patent Classification (CPC):
**H01M 50/209; H01M 10/0481; H01M 50/242; H01M 50/264; H01M 50/291;** H01M 2220/20; Y02E 60/10

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH LA MA MD TN**

(30) Priority: **05.09.2024 KR 20240121079**

(71) Applicant: **SAMSUNG SDI CO., LTD.**
**Yongin-si, Gyeonggi-do 17084 (KR)**

(72) Inventors:
• **HYUN, Seungjoo**
**17084 Yongin-si (KR)**
• **CHO, Mansik**
**17084 Yongin-si (KR)**

(74) Representative: **Marks & Clerk LLP**
**15 Fetter Lane**
**London EC4A 1BW (GB)**

(54) **BATTERY MODULE**

(57)    A battery module includes battery cells arranged in a first direction such that main surfaces of the battery cells are adjacent to each other, a pair of end plates at outermost sides of the battery cells, and a pair of side plates coupled to the pair of end plates and covering side surfaces of the battery cells. Each of the end plates includes a first elastic portion extending across the end plates in a second direction substantially perpendicular to the first direction, and each of the side plates includes a groove overlapping the first elastic portion in the second direction and extending in the first direction.

FIG. 1

## Description

## BACKGROUND

### 1. Field

The present disclosure relates to a battery module.

### 2. Description of the Related Art

Secondary batteries are batteries that can be charged and discharged, unlike primary batteries that cannot be recharged. Low-capacity battery cells are used in small, portable electronic devices such as smartphones, feature phones, laptops, digital cameras, and camcorders, whereas high-capacity battery cells are widely used as power supplies for driving motors in hybrid cars, electric cars, or the like and as power storage cells. These battery cells include an electrode assembly comprising a positive electrode and a negative electrode, a case housing the electrode assembly, and electrode terminals connected to the electrode assembly.

High-capacity battery cells may be used as battery modules in which a plurality of battery cells are connected in series and/or parallel to provide high energy density (e.g. for driving a motor in a hybrid vehicle).

## SUMMARY

Embodiments of the present disclosure provide a battery module with improved structural stability.

However, the technical problems to be solved by the present disclosure are not limited to the problems described above, and other problems not mentioned can be clearly understood by those skilled in the art from the description of the invention described below.

Additional aspects will be set forth in part in the description which follows and, in part, will be apparent from the description, or may be learned by practice of the presented embodiments of the disclosure.

An embodiment of the present disclosure discloses a battery module comprising a plurality of battery cells arranged in a first direction such that main surfaces of the battery cells are adjacent to each other, a pair of end plates at the outermost sides of the battery cells, and a pair of side plates coupled to the pair of end plates and covering side surfaces of the battery cells. Each of the end plates includes a first elastic portion extending across the end plates in a second direction substantially perpendicular to the first direction, and each of the side plates includes a groove overlapping the first elastic portion in the second direction and extending in the first direction.

In some embodiments, each of the end plates may include a first region and a second region respectively positioned below and above the first elastic portion, and a strength of each of the first region and the second region may be greater than a strength of the first elastic portion.

In some embodiments, each of the end plates may be welded to the side plates in the first region and the second region.

In some embodiments, the width of the groove may be smaller than the thickness of the first elastic portion.

In some embodiments, the ratio of the thickness of the first elastic portion to the height of the end plate may be from approximately 0.02 to approximately 0.2.

In some embodiments, each of the end plates may further include a second elastic portion, and the first elastic portion and the second elastic portion may be substantially symmetrical to each other with respect to a center line of the end plate substantially parallel to the second direction.

In some embodiments, each of the end plates may further include a third region between the first elastic portion and the second elastic portion.

In some embodiments, the width of the groove may decrease along the first direction as the distance of the groove from the end plates increases.

In some embodiments, the end of the groove may include a concave round shape.

In some embodiments, the end of the groove may extend in a third direction substantially perpendicular to the first direction and the second direction and may have a T-shape.

Another embodiment of the present disclosure discloses a battery module comprising a plurality of battery cells arranged in a first direction such that main surfaces of the battery cells are adjacent to each other, a pair of end plates at the outermost sides of the battery cells, and a pair of side plates coupled to the pair of end plates and covering side surfaces of the battery cells. Each of the end plates includes a first elastic portion extending across the end plates in a second direction substantially perpendicular to the first direction, and each of the end plates includes a first region and a second region positioned below and above the first elastic portion, and the strength of each of the first region and the second region are greater than the strength of the first elastic portion.

In some embodiments, each of the end plates further includes a second elastic portion, and the first elastic portion and the second elastic portion may be substantially symmetrical to each other with respect to a center line of the end plate substantially parallel to the second direction.

In some embodiments, each of the end plates may further include a third region between the first elastic portion and the second elastic portion.

In some embodiments, each of the end plates may be welded to the side plates in the first region and the second region.

In some embodiments, the ratio of the thickness of the first elastic portion to the height of the end plate may be from approximately 0.02 to approximately 0.2.

In some embodiments, each of the side plates may include a groove overlapping the first elastic portion in the second direction and extending in the first direction.

In some embodiments, the width of the groove may be smaller than the thickness of the first elastic portion.

In some embodiments, the width of the groove may decrease as the distance of the groove from the end plate increases.

In some embodiments, the end of the groove may include a concave round shape.

In some embodiments, the end of the groove may extend in a third direction substantially perpendicular to the first direction and the second direction and may have a T-shape.

At least some of the above and other features of the invention are set out in the claims.

## BRIEF DESCRIPTION OF THE DRAWINGS

The following drawings attached to this specification illustrate preferred embodiments of the present disclosure and, together with the detailed description of the invention described below, serve to further understand the technical idea of the present disclosure. Therefore, the present disclosure should not be interpreted as being limited to matters described in such drawings, in which:

FIG. 1 is a perspective view schematically illustrating a battery module according to one embodiment of the present disclosure;

FIG. 2 is a perspective view schematically illustrating a battery cell of the battery module of FIG. 1;

FIG. 3 is a cross-sectional diagram schematically illustrating the cross-section III-III' of FIG. 2;

FIG. 4 is a side view of the battery module of FIG. 1 viewed in a first direction x;

FIG. 5 is a side view of an end plate , viewed in a second direction y absorbing a swelling force in response to the battery cell of the battery module of FIG. 1 being swollen;

FIG. 6 is a side view of part A of FIG. 1 viewed in a second direction y;

FIG. 7 is a perspective view schematically illustrating a battery module according to another embodiment of the present disclosure;

FIG. 8 is a side view of part B of FIG. 7 viewed in a second direction y;

FIG. 9 is a side view of a battery module according to another embodiment of the present disclosure viewed in a second direction y;

FIG. 10 is a side view of a battery module according to another embodiment of the present disclosure viewed in a second direction y; and

FIG. 11 is a side view of a battery module according to another embodiment of the present disclosure viewed in the second direction y.

## DETAILED DESCRIPTION

Reference will now be made in detail to embodiments, examples of which are illustrated in the accompanying drawings, wherein like reference numerals refer to like elements throughout. In this regard, the present embodiments may have different forms and should not be construed as being limited to the descriptions set forth herein. Accordingly, the embodiments are merely described below, by referring to the figures, to explain aspects. As used herein, the term "and/or" includes any and all combinations of one or more of the associated listed items. Expressions such as "at least one of," when preceding a list of elements, modify the entire list of elements and do not modify the individual elements of the list.

Hereinafter, preferred embodiments of the present disclosure will be described in detail with reference to the attached drawings. Prior to this, terms or words used in this specification and claims should not be interpreted as limited to their usual or dictionary meanings and should be interpreted as meanings and concepts that conform to the technical idea of the present disclosure based on the principle that the inventor can appropriately define a concept of a term to explain his or her own invention in the best way. Therefore, the embodiments described in this specification and the configurations illustrated in the drawings are only some of the most preferred embodiments of the present disclosure and do not represent all of the technical ideas of the present disclosure, and it should be understood that there may be various equivalents and modified examples that can replace them at the time of filing this present disclosure.

In some embodiments, when used herein, the words "comprise, include" and/or "comprising, including", specify the presence of stated figures, numbers, steps, operations, elements, components and/or groups thereof, but do not preclude the presence or addition of one or more other figures, numbers, operations, elements, components and/or groups thereof.

In some embodiments, to aid understanding of the invention, the attached drawings are not drawn to an actual scale and the dimensions of some components may be exaggerated. In some embodiments, the same reference numbers may be assigned to the same components in different embodiments.

Although the terms first, second, or the like are used to describe various components, these components are not limited by these terms. These terms are used only to distinguish one component from another, and unless otherwise specifically stated, it is to be understood that a first component may also be a second component.

Throughout the specification, unless otherwise specifically stated, each component may be singular or plural.

Any configuration being placed "above (or below)" a component or "on (or off)" a component may mean not only that any configuration is placed in contact with the upper surface (or lower surface) of the component, but also that other configurations may be interposed between the component and any configuration placed above (or below) the component.

In some embodiments, when it is described that a component is "connected," "coupled," or "linked" to another component, it should be understood that the components may be directly connected or linked to one another, but that other components may also be "interposed" between each component, or that each component may be "connected," "coupled," or "linked" through other components. Also, when we say that a portion is electrically coupled to another portion, this includes not only cases where they are directly connected, but also cases where they are connected to each other with another element in between.

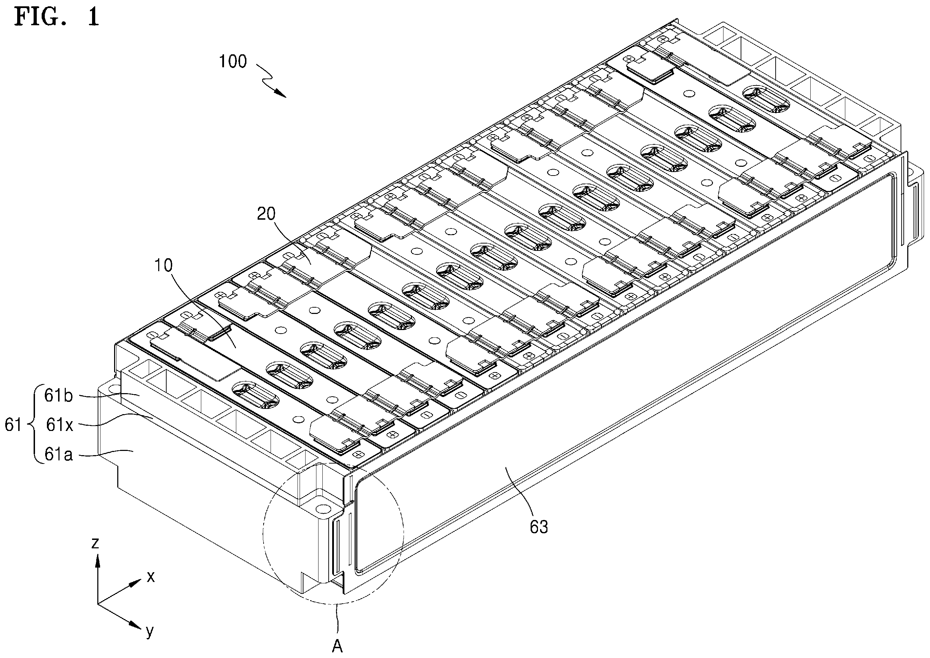

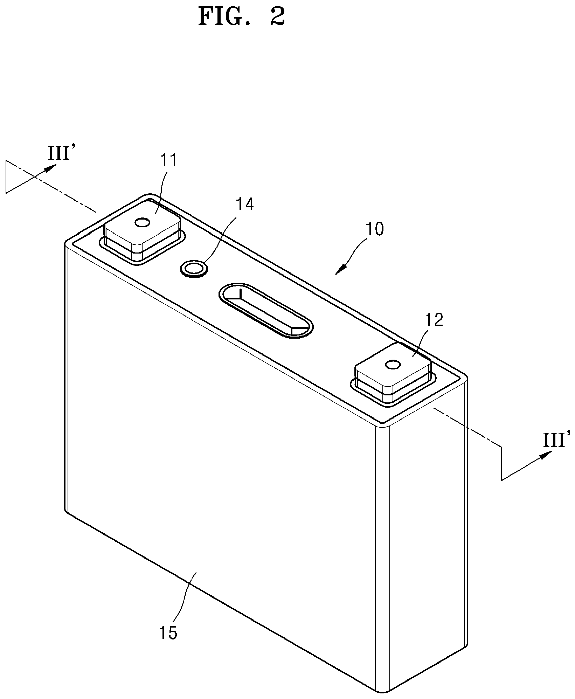

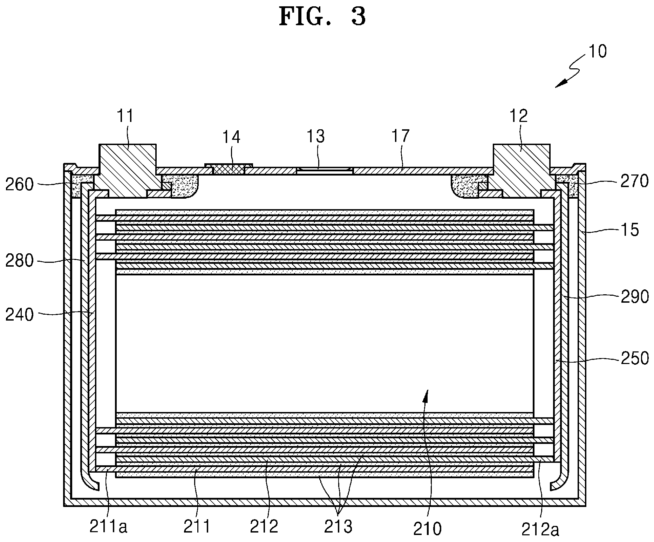

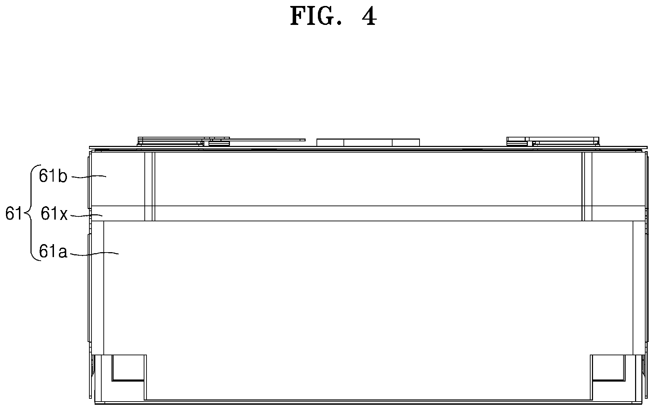

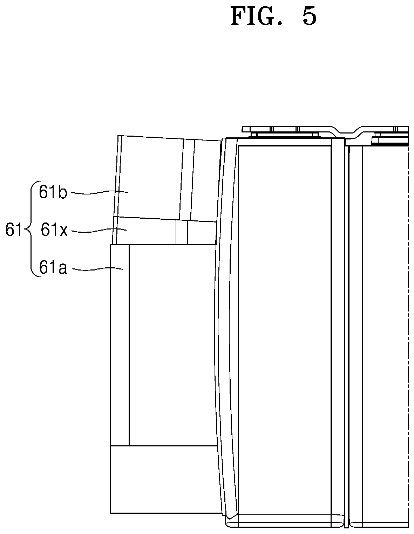

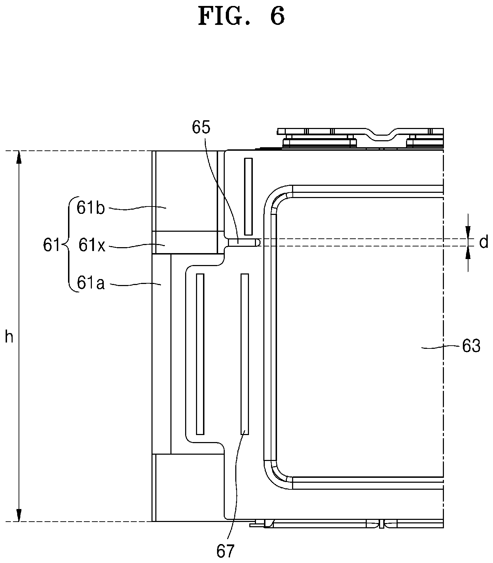

FIG. 1 is a perspective view schematically illustrating a battery module according to an embodiment of the present disclosure, FIG. 2 is a perspective view schematically illustrating a battery cell of the battery module of FIG. 1, FIG. 3 is a cross-sectional view schematically illustrating a cross-section III-III' of FIG. 2, FIG. 4 is a side view of the battery module of FIG. 1 when viewed in a first direction (x-direction), FIG. 5 is a side view of end plates absorbing a swelling force in response to the battery cell of the battery module of FIG. 1 being swollen when viewed in a second direction (y-direction), and FIG. 6 is a side view of part A of FIG. 1 when viewed in a second direction (y-direction).

Referring to FIGS. 1 to 6, a battery module 100 according to an embodiment of the present disclosure may include a plurality of battery cells 10 arranged in a first direction (x-direction) such that their main surfaces are adjacent to each other, and bus bars 20 electrically connecting one battery cell 10 to another battery cell 10 adjacent thereto. As used herein, the main surface of the battery cell 10 refers to the widest surface of the battery cell 10.

Each of the battery cells 10 may include a first terminal 11, a second terminal 12, and a vent 13 configured to discharge gas generated internally. As shown in FIGS. 1 to 3, the first terminal 11, the second terminal 12, and the vent 13 are on one side of the battery cell 10 and the first terminal 11 and the second terminal 12 are electrically connected to one of the bus bars 20.

The first terminal 11 may be either a positive terminal or a negative terminal. In an embodiment in which the first terminal 11 is a positive terminal, the second terminal 12 may be a negative terminal, and conversely, in an embodiment in which the first terminal 11 is a negative terminal, the second terminal 12 may be a positive terminal. That is, the first terminal 11 and the second terminal 12 have different electrical polarities and are not limited to a specific polarity.

A first terminal 11 of a battery cell 10 may be electrically connected to a second terminal 12 of another adjacent battery cell 10 through one of the bus bars 20, and the second terminal 12 of the battery cell 10 may be electrically connected to a first terminal 11 of another battery cell 10 adjacent thereto through another bus bar 20.

Although FIG. 1 illustrates a serial connection between the battery cells 10, the present disclosure is not limited to this structure and various connection structures may be adopted as needed. In addition, the number and arrangement of battery cells 10 are not limited to the structure shown in FIG. 1 and may be changed as needed.

Each of the plurality of battery cells 10 may include at least one electrode assembly 210 wound with a separator 213, which is an insulator, interposed between a positive electrode 211 and a negative electrode 212, and a case 15 in which the electrode assembly 210 is accommodated.

The battery cell 10 according to the present embodiment is described as a square (rectangular) lithium-ion battery cell as an example. However, the present disclosure is not limited thereto, and the present disclosure may be applied to various types of battery cells such as lithium polymer battery cells or cylindrical battery cells.

The positive electrode 211 and the negative electrode 212 may include a coated portion, which is a region where an active material is applied to a current collector formed of a metal foil of a thin plate, and non-coated portions 211a and 212a, which are regions where the active material is not coated.

The positive electrode 211 and the negative electrode 212 are wound with a separator 213, which is an insulator, interposed between them. However, the present disclosure is not limited thereto, and the electrode assembly 210 may be formed in a structure in which a positive electrode and a negative electrode made of a plurality of sheets that are alternately laminated with a separator in between.

The case 15 forms the overall appearance of the battery cell 10 and may be formed of a conductive metal such as aluminum, an aluminum alloy, or nickel-plated steel. In some embodiments, the case 15 may provide a space in which the electrode assembly 210 is accommodated.

The battery cell 10 may include a cap plate 17 covering an opening of the case 15, and the case 15 and the cap plate 17 may be made of a conductive material. In one or more embodiments, the first terminal 11 and the second terminal 12 electrically connected to the positive electrode 211 or the negative electrode 212 may penetrate the cap plate 17 and protrude outwardly from the cap plate 17.

In addition, the outer main surface of an upper pillar of the first terminal 11 and the second terminal 12 protruding outwardly from the cap plate 17 may be screwed and fixed to the cap plate 17 with a nut.

However, the present disclosure is not limited thereto, and the first terminal 11 and the second terminal 12 may be formed of a rivet structure and may be riveted or may be welded to the cap plate 17.

In addition, the cap plate 17 may be made of a thin plate and may be welded to the opening of the case 15. The cap plate 17 may include an electrolyte injection port 14 into which a sealing cap may be installed. The cap plate 17 may also include the vent 13 having a notch.

The first terminal 11 and the second terminal 12 may be electrically connected to the current collectors including the first and second collectors 240 and 250, respectively, (hereinafter referred to as positive and negative current collectors), which are welded to a positive uncoated portion 211a and a negative uncoated portion 212a, respectively.

For example, the first terminal 11 and the second terminal 12 may be coupled to the positive and negative current collectors 240 and 250, respectively, by welding. However, the present disclosure is not limited thereto, and the first terminal 11 may be integral with the positive current collector 240 and the second terminal 12 may be integral with the negative current collector 250.

In some embodiments, an insulating member may be between the electrode assembly 210 and the cap plate 17. In one or more embodiments, the insulating member may include first and second lower insulating members 260 and 270, and each of the first and second lower insulating members 260 and 270 may be between the electrode assembly 210 and the cap plate 17.

In some embodiments, according to the present disclosure, one end of a separating member facing one side surface of the electrode assembly 210 may be between the insulating member and the first terminal 11 and the second terminal 12.

In one or more embodiments, the separating member may include first and second separating members 280 and 290.

Accordingly, one end of the first and second separating members 280 and 290 facing one side of the electrode assembly 210 may be between the first and second lower insulating members 260 and 270 and the first terminal 11 and the second terminal 12, respectively.

In one or more embodiments, the first terminal 11 and the second terminal 12 welded to the positive and negative current collectors 240 and 250, respectively, may be connected to one end of the first and second lower insulating members 260 and 270, respectively, and the first and second separating members 280 and 290, respectively.

Additionally, a plurality of battery cells 10 arranged in a first direction (x-direction) such that their main surfaces are adjacent to each other may be accommodated by a housing. The housing may include a pair of end plates 61 arranged at the outermost sides of the battery cells 10, a pair of side plates 63 coupled (e.g., connected) to the pair of end plates 61 and covering the side surfaces of the battery cells 10, and a bottom plate supporting the bottom surfaces of the battery cells 10.

The connection between the end plate 61 and the side plate 63 may be made by coupling with a member such as a bolt or by welding, but the present disclosure is not limited thereto, and any method that may be used for coupling is possible.

Additionally, in one or more embodiments, each of the pair of end plates 61 has elasticity. In response to one or more of the battery cells 10 expanding (hereinafter referred to as 'swelling') due to the charging and discharging operations of the battery cells 10, the end plates 61 may absorb pressure due to expansion of the battery cells 10 (hereinafter referred to as 'swelling force') and prevent (or at least mitigate) the performance degradation of the battery cells 10. In this manner, the pair of end plates 61 are configured to improve the structural stability of the battery module 100.

In one or more embodiments, as illustrated in FIG. 4, each of the end plates 61 may include a first elastic portion 61x extending across the end plate 61 in a second direction (y-direction) substantially perpendicular to the first direction (x-direction). In some embodiments, each of the end plates 61 may include a first region 61a and a second region 61b respectively positioned below and above the first elastic portion 61x.

The first elastic portion 61x may be in contact with the first region 61a and the second region 61b. In one or more embodiments, the first region 61a and the second region 61b of the end plate 61 may have a structure joined by the first elastic portion 61x.

Additionally, in one or more embodiments, the strength of each of the first region 61a and the second region 61b may be greater than the strength of the first elastic portion 61x, and the elasticity of each of the first region 61a and the second region 61b may be less than the elasticity of the first elastic portion 61x. That is, the first region 61a and the second region 61b may be relatively high-strength regions, and the first elastic portion 61x may be a relatively high-elasticity region.

The first region 61a and the second region 61b may include at least one of aluminum, steel or magnesium alloy, but the present disclosure is not limited thereto.

The first elastic portion 61x may include a highly elastic material. For example, the first elastic portion 61x may include at least one of silicone rubber, EPDM (Ethylene Propylene Diene Monomer) rubber, polyurethane rubber, neoprene rubber, fluoroelastomer, or TPU (Thermoplastic Polyurethane), but the present disclosure is not limited thereto.

Additionally, during swelling, the central portion of the battery cell 10 may expand, causing a lifting phenomenon at the weld portion between the case 15 and the cap plate 17, and thus the joint portion between the case 15 and the cap plate 17 may be broken or otherwise damaged.

In addition, the swelling phenomenon of the battery cells 10 may become greater as charging and discharging are repeated, and a continuous load may be applied to the pair of end plates 61, causing the end plates 61 to be bent outwardly along the first direction (x-direction). In this case, the effect of the end plates 61 pressurizing the plurality of battery cells 10 is reduced, which deteriorates the performance and stability of the battery module 100, and the joint region between the case 15 of the battery cell 10 and the cap plate 17 may be damaged by the swelling force.

However, according to the present disclosure, since each of the end plates 61 includes the first elastic portion 61x which is a relatively high-elasticity region and the first region 61a and the second region 61b are relatively high-strength regions, as shown in FIG. 5, in response to one or more of the battery cells 10 swelling, the swelling force may be effectively absorbed by the shape change of the first elastic portion 61x while simultaneously maintaining pressurization on the battery cells 10. Accordingly, the joint portion between the case 15 and the cap plate 17 of the battery cell 10 that is swollen may be prevented (or at least mitigated) from being broken, and the performance of the battery cell 10 may be prevented (or at least mitigated) from being deteriorated due to swelling.

Additionally, in one or more embodiments, the height h of the end plate 61 is defined as the length measured from the lowest to the highest point of the end plate 61 along a third direction (z-direction), as shown in FIG. 6, and the first elastic portion 61x may be located at any position that is approximately $\frac{1}{2}h$ to approximately $\frac{7}{8}h$ from the lowest point of the end plate 61.

In an embodiment in which the first elastic portion 61x is at a position that is less than $\frac{1}{2}h$ from the lowest point of the end plate 61, the distance between the first elastic portion 61x and the joint portion of the case 15 and the cap plate 17 of the battery cell 10 increases, and a break may occur at the joint portion of the case 15 and the cap plate 17 of the battery cell 10.

In addition, in an embodiment in which the first elastic portion 61x is at a position that is more than $\frac{7}{8}h$ from the lowest point of the end plate 61, the swelling force, which is greatest at the center of the end plate 61, may not be effectively absorbed when the battery cell 10 is swollen.

Additionally, in one or more embodiments, the ratio of the thickness of the first elastic portion 61x to the height of the end plate 61 may be in a range from approximately 0.02 to approximately 0.2. In an embodiment in which the ratio of the thickness of the first elastic portion 61x to the height of the end plate 61 is less than 0.02, when the battery cell 10 is swollen, the effect of the first elastic portion 61x absorbing the swelling force may be insignificant or insufficient/less than desired. In an embodiment in which the ratio of the thickness of the first elastic portion 61x to the height h of the end plate 61 is more than 0.2, the ratio of the first region 61a and the second region 61b, which are relatively high-strength regions in the end plate 61, becomes small, and thus the effect of the first region 61a and the second region 61b pressurizing the plurality of battery cells 10 located inside the end plates 61 may be insignificant or insufficient/less than desired. Accordingly, the performance of a plurality of battery cells 10 may deteriorate due to swelling if the ratio is less than 0.02 or greater than 0.2.

Additionally, referring to FIG. 1 and FIG. 6, a pair of side plates 63 covering the side surfaces of the battery cells 10 may be connected to a pair of end plates 61. In some embodiments, each of the side plates 63 may include a groove 65 that overlaps the first elastic portion 61x in the second direction (y-direction) and extends in the first direction (x-direction).

The side plate 63 may include the same metal material as the first region 61a and the second region 61b of the end plate 61. In some embodiments, the connection between the side plate 63 and the end plate 61 may be formed by welding. Accordingly, the side plates 63 (which may be made of a metal material) and the end plates 61 (which may also be made of a metal material) may be connected by one or more welding beads or lines 67 in the first region 61a and the second region 61b.

Additionally, in response to one or more of the battery cells 10 swelling, the shape of the first elastic portion 61x changes such that one or both of the end plates 61 may become convex outwardly along the first direction (x-direction). The groove 65 in each of the side plates 63, which overlaps the first elastic portion 61x in the second direction (y-direction) and extends in the first direction (x-direction), may spread along the third direction (z-direction) substantially perpendicular to the first direction (x-direction) and the second direction (y-direction), thereby dispersing the stress or tensile force applied to both ends of the side plate 63.

In an embodiment in which the side plate 63 does not include the groove 65, when the battery cell 10 is swollen, the end plate 61 may change convexly outwardly along the first direction (x-direction) due to swelling force, and thus the side plate 63 may be damaged by stress or tensile force applied to both ends of the side plate 63 connected to the end plates 61.

However, according to the present disclosure, since or when each of the side plates 63 includes the groove 65, even if the shape of the end plate 61 changes, damage to the side plate 63 may be prevented (or at least mitigated), thereby improving the structural stability of the battery module 100.

Additionally, the length of the groove 65 of the side plate 63 may be selected such that the battery cell 10 is not exposed. When or if the length of the groove 65 of the side plate 63 is too long, the battery cell 10 may be exposed to the outside. In this case, the battery cell 10 may come into contact with an external object and be shortcircuited or may be damaged by an external impact.

In some embodiments, the width d of the groove 65 of the side plate 63 may be smaller than the thickness of the first elastic portion 61x, as shown in FIG. 6. In an embodiment in which the width d of the groove 65 of the side plate 63 is larger than the thickness of the first elastic portion 61x, the welded area 67 of the side plate 63 and the end plate 61 welded in the first region 61a and the second region 61b becomes narrow, and thus the coupling between the side plate 63 and the end plate 61 may become weak, or may be weakened.

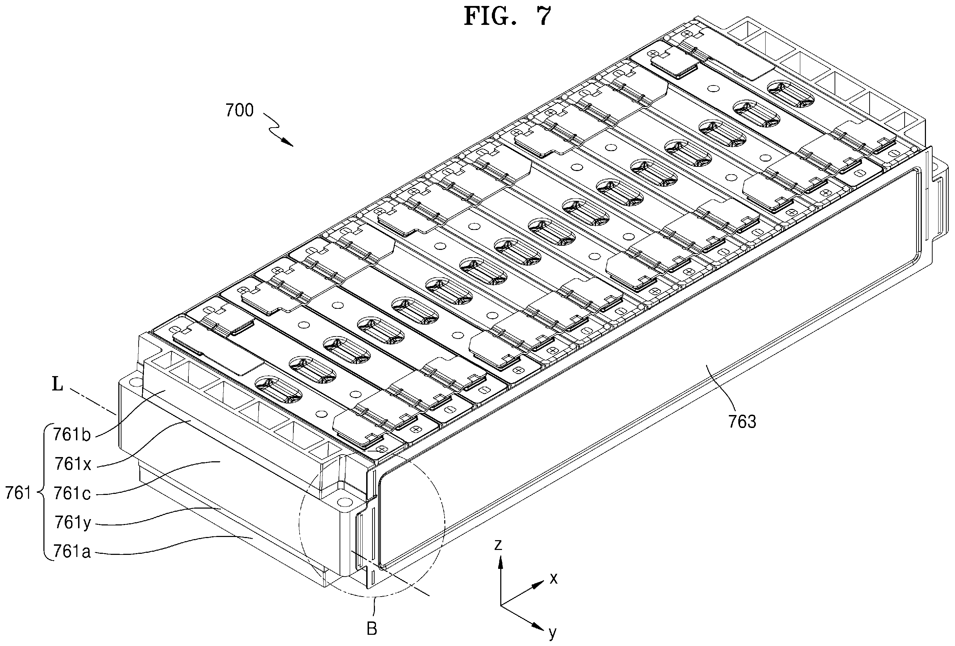

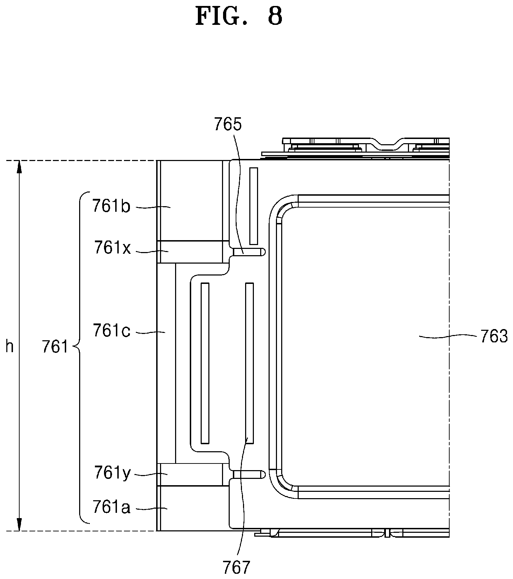

FIG. 7 is a perspective view schematically illustrating a battery module according to another embodiment of the present disclosure, and FIG. 8 is a side view of part B of FIG. 7 viewed in the second direction (y-direction).

Referring to FIGS. 7 and 8, a battery module 700 according to another embodiment of the present disclosure may include a plurality of battery cells arranged in a first direction (x-direction) such that their main surfaces are adjacent to each other, a pair of end plates 761 at the outermost sides of the battery cells, and a pair of side plates 763 coupled (e.g., connected) to the pair of end plates 761 and covering side surfaces of the battery cells.

Each of the end plates 761 may include a first elastic portion 761x that crosses the end plate 761 in a second direction (y-direction) substantially perpendicular to the first direction (x-direction) and a second elastic portion 761y that is substantially symmetrical to the first elastic portion 761x with respect to the center line L of the end plate 761 that is substantially parallel to the second direction (y-direction). In some embodiments, each of the end plates 761 may include a second region 761b above the first elastic portion x, a third region 761c between the first elastic portion 761x and the second elastic portion 761y, and a first region 761a below the second elastic portion 761y.

In one or more embodiments, the first elastic portion 761x may be in contact with the second region 761b and the third region 761c, and the second elastic portion 761y may be in contact with the first region 761a and the third region 761c. For example, the end plate 761 may have a structure in which the first elastic portion 761x is between the second region 761b and the third region 761c and in contact with the second region 761b and the third region 761c. In addition, the end plate 761 may have a structure in which the second elastic portion 761y is between the first region 761a and the third region 761c and in contact with the first region 761a and the third region 761c.

The first elastic portion 761x, the first region 761a, and the second region 761b are identical to the first elastic portion 61x, the first region 61a, and the second region 61b illustrated and described in FIG. 1, and therefore will not be described again.

In one or more embodiments, the second elastic portion 761y may include the same material as the first elastic portion 761x. Therefore, the first elastic portion 761x and the second elastic portion 761y may be relatively high-elasticity regions. In some embodiments, the third region 761c may include the same material as the first region 761a and the second region 761b. Therefore, the first region 761a, the second region 761b, and the third region 761c may be relatively high-strength regions.

As described above, in response to one or more of the battery cells swelling, the shapes of the first elastic portion 761x and the second elastic portion 761y change such that the end plate 61 may be elastically deformed convexly outwardly along the first direction (x-direction) by the swelling force. In an embodiment in which the battery module 700 includes the first elastic portion 761x and the second elastic portion 761y that are substantially symmetrical to each other with respect to the center line L of the end plate 761, the first elastic portion 761x and the second elastic portion 761y may effectively absorb the swelling force, thereby preventing (or at least mitigating) breakage of the joint portion between the case and the cap plate of the battery cell, and preventing (or at least mitigating) degradation of the performance of the battery cell, and thereby improving the structural stability of the battery module 700.

Although the first elastic portion 761x and the second elastic portion 761y are shown as being substantially symmetrical to each other with respect to the center line L of the end plate 761 in FIGS. 7 and 8, the first elastic portion 761x and the second elastic portion 761y may not be symmetrical with respect to the center line L.

The number of elastic portions of the end plate 761 may be one, two or three or more.

Additionally, as shown in FIG. 8, the height of the end plate 761 may be h. In one or more embodiments, the first elastic portion 761x may be at a position that is approximately $\frac{1}{2}h$ to approximately $\frac{7}{8}h$ from the lowest point of the end plate 761. In addition, the second elastic portion 761y may be at a position that is approximately $\frac{1}{8}h$ to approximately $\frac{1}{2}h$ from the lowest point of the end plate 761.

In an embodiment in which the first elastic portion 761x is at a position that is more than $\frac{7}{8}h$ from the lowest point of the end plate 761 or the second elastic portion 761y is at a position that is less than $\frac{1}{8}h$ from the lowest point of the end plate 761, the swelling force, which is greatest at the center of the end plate 61, may not be (or may be less) effectively absorbed by the first elastic portion 761x and the second elastic portion 761y when the battery cell 10 is swollen.

Additionally, a pair of side plates 763 covering side surfaces of the battery cells may be coupled (e.g.,

connected) to a pair of end plates 761. In some embodiments, each of the side plates 763 may include grooves 765 that overlap the first elastic portion 761x and the second elastic portion 761y in the second direction (y-direction) and extend in the first direction (x-direction).

The side plate 763 may include the same metal material as the first region 761a, the second region 761b, and the third region 761c of the end plate 761. In some embodiments, the connection between the side plate 763 and the end plate 761 may be formed by welding. Accordingly, the side plate 763 (which may be made of a metal material) and the end plate 761 (which may be made of a metal material) may be connected by welding 767 in each of the first region 761a, the second region 761b, and the third region 761c.

In an embodiment in which the side plate 763 includes grooves 765 overlapping the first elastic portion 761x and the second elastic portion 761y in the second direction (y-direction) and extending in the first direction (x-direction), the grooves 765 may each be configured to spread apart in response to the battery cell being swollen, thereby efficiently dispersing stress or tensile force applied to both ends of the side plate 763, and thus the structural stability of the battery module 700 may be improved.

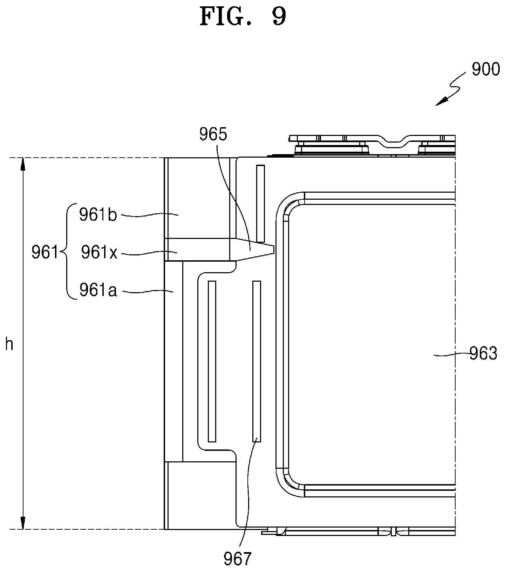

FIG. 9 is a side view of a battery module according to another embodiment of the present disclosure, viewed in a second direction (y-direction).

Referring to FIG. 9, a battery module 900 according to another embodiment of the present disclosure may include a plurality of battery cells arranged in a first direction (x-direction) such that their main surfaces are adjacent to each other, a pair of end plates 961 at the outermost sides of the battery cells, and a pair of side plates 963 coupled (e.g., connected) to the pair of end plates 961 and covering side surfaces of the battery cells.

Each of the end plates 961 may include a first elastic portion 961x extending across the end plate 961 in a second direction (y-direction) substantially perpendicular to the first direction (x-direction). In some embodiments, each of the end plates 961 may include a first region 961a and a second region 961b respectively positioned below and above the first elastic portion 961x.

The first elastic portion 961x, the first region 961a, and the second region 961b are identical to the first elastic portion 61x, the first region 61a, and the second region 61b illustrated and described in FIG. 1, and therefore they will not be described again.

Additionally, a pair of side plates 963 covering side surfaces of the battery cells may be coupled (e.g., connected) to the pair of end plates 961. In some embodiments, each of the side plates 963 may include a groove 965 that overlaps the first elastic portion 961x in the second direction (y-direction) and extends in the first direction (x-direction). In some embodiments, the width of the groove 965 may be decreased along the first direction (x-direction) as the distance of the groove 965 from the end plates 961 increases.

In an embodiment in which the width of the groove 965 of the side plate 963 decreases along the first direction (x-direction) as the distance thereof from the end plate 961 increases (e.g., the width of the groove 965 tapers along its length), the concentration of stress or tensile force applied on the groove 965 may be minimized or at least reduced. For example, the length of the groove 965 may be such that the battery cells are not exposed, and the shape of the groove 965 may be a V-shape. In this embodiment, the concentration of stress or tensile force on the side plate 963 may be dispersed, and accordingly the tensile strength of the side plate 963 may be increased, thereby preventing (or at least mitigating) the side plate 963 from being damaged when the battery cell is swollen, thereby improving the structural stability of the battery module 900.

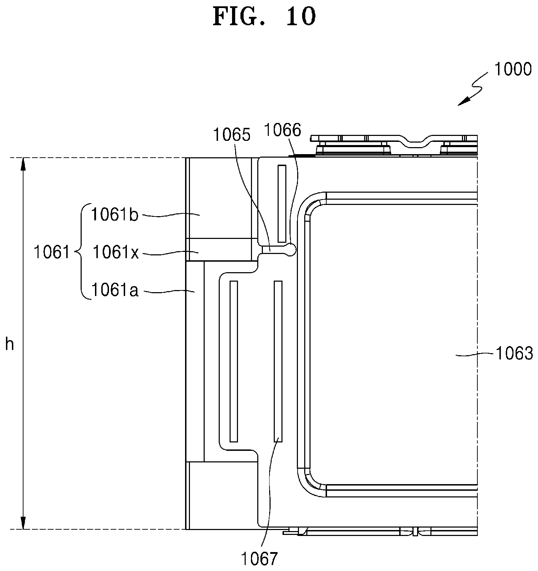

FIG. 10 is a side view of a battery module according to another embodiment of the present disclosure, viewed in a second direction (y-direction).

Referring to FIG. 10, a battery module 1000 according to another embodiment of the present disclosure may include a plurality of battery cells arranged in a first direction (x-direction) such that their main surfaces are adjacent to each other, a pair of end plates 1061 at the outermost sides of the battery cells, and a pair of side plates 1063 coupled (e.g., connected) to the pair of end plates 1061 and covering side surfaces of the battery cells.

Each of the end plates 1061 may include a first elastic portion 1061x extending across the end plate 1061 in a second direction (y-direction) substantially perpendicular to the first direction (x-direction). In some embodiments, each of the end plates 1061 may include a first region 1061a and a second region 1061b respectively positioned below and above the first elastic portion 1061x.

The first elastic portion 1061x, the first region 1061a, and the second region 1061b are identical to the first elastic portion 61x, the first region 61a, and the second region 61b illustrated and described in FIG. 1, and therefore they will not be described again.

Additionally, a pair of side plates 1063 covering side surfaces of the battery cells may be coupled (e.g., connected) to a pair of end plates 1061. In some embodiments, each of the side plates 1063 may include a groove 1065 that overlaps the first elastic portion 1061x in the second direction (y-direction) and extends in the first direction (x-direction). In some embodiments, the end 1066 of the groove 1065 may include a concave round shape. In one or more embodiments, the end 1066 of the groove 1065 may be enlarged (e.g., having a larger diameter than the width of the remainder of the groove 1065). A convex round shoulder, or opposing convex round shoulders, may connect the enlarged round shape to the remainder of the groove 1065.

In an embodiment in which the end 1066 of the groove 1065 of the side plate 1063 includes a concave round shape, the stress or tensile force applied on the end 1066 of the groove 1065 when the battery cell is swollen is not concentrated at one point but is evenly dispersed around along the concave round shape such that the resistance to the stress or tensile force of the side plate 1063 may be increased. Accordingly, the structural stability of the battery module 1000 may be improved by preventing (or at least mitigating) the side plate 1063 from being damaged when the battery cell is swollen.

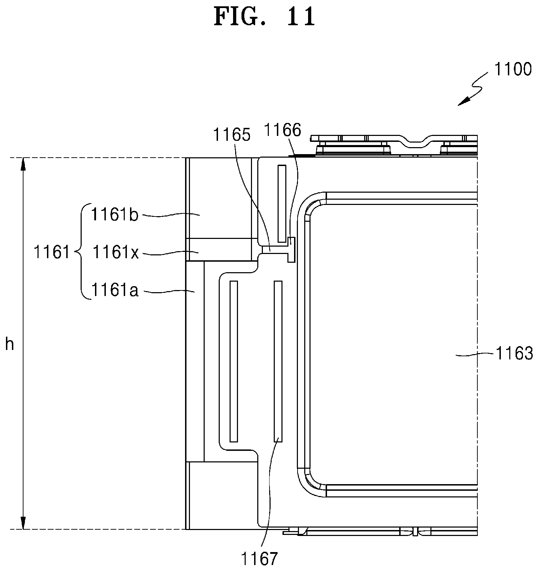

FIG. 11 is a side view of a battery module according to another embodiment of the present disclosure, viewed in a second direction (y-direction).

Referring to FIG. 11, a battery module 1100 according to another embodiment of the present disclosure may include a plurality of battery cells arranged in a first direction (x-direction) such that their main surfaces are adjacent to each other, a pair of end plates 1161 at the outermost sides of the battery cells, and a pair of side plates 1163 coupled (e.g., connected) to the pair of end plates 1161 and covering side surfaces of the battery cells.

Each of the end plates 1161 may include a first elastic portion 1061x extending across the end plate 1161 in a second direction (y-direction) substantially perpendicular to the first direction (x-direction). In some embodiments, each of the end plates 1161 may include a first region 1161a and a second region 1161b respectively positioned below and above the first elastic portion 1161x.

The first elastic portion 1161x, the first region 1161a, and the second region 1161b are identical to the first elastic portion 61x, the first region 61a, and the second region 61b illustrated and described in FIG. 1, and therefore they will not be described again.

Additionally, a pair of side plates 1163 covering side surfaces of the battery cells may be coupled (e.g., connected) to a pair of end plates 1161. In some embodiments, each of the side plates 1163 may include a groove 1165 that overlaps the first elastic portion 1161x in the second direction (y-direction) and extends in the first direction (x-direction). In some embodiments, the end of the groove 1165 may extend in a third direction (z-direction) substantially perpendicular to the first direction (x-direction) and the second direction (y-direction). In one or more embodiments, the groove 1165 may have a T-shape.

In an embodiment in which the end of the groove 1165 of the side plate 1163 extends in a third direction (z-direction) substantially perpendicular to the first direction (x-direction) and the second direction (y-direction) and has a T-shape, when the battery cell is swollen, the stress or tensile force applied on the groove 1165 may be dispersed along the third direction (z-direction) as the groove 1165 extends from the end in the third direction (z-direction). Accordingly, the resistance to stress or tensile force of the side plate 1163 may be increased, and the structural stability of the battery module 1100 may be improved by preventing (or at least mitigating) the side plate 1163 from being damaged when the battery cell is swollen.

Additionally, in the embodiments according to the present disclosure described in FIGS. 9 to 11, the end plates 961, 1061, and 1161 include only one elastic portion, but the number of elastic parts may be varied as desired.

According to embodiments of the present disclosure, since a battery module includes end plates including an elastic portion and side plates including a groove, the connection portion between the cap plate and the case of the battery cell is prevented (or at least mitigated) from being broken when the battery cell is swollen, and the side plates are prevented (or at least mitigated) from being damaged, thereby improving the structural stability of the battery module.

Although the present disclosure has been described above with reference to specific embodiments and drawings, the present disclosure is not limited thereto, and it is obvious that various modifications and variations are possible within the scope of the technical idea of the present disclosure and the equivalent scope of the claims to be described below by a person skilled in the art to which the present disclosure pertains.

## Claims

1. A battery module comprising

   a plurality of battery cells arranged in a first direction such that main surfaces of the plurality of battery cells are adjacent to each other;
   a pair of end plates at outermost sides of the plurality of battery cells; and
   a pair of side plates coupled to the pair of end plates and covering side surfaces of the plurality of battery cells,
   wherein each end plate of the pair of end plates comprises a first elastic portion extending across the each end plate in a second direction substantially perpendicular to the first direction, and
   wherein each side plate of the pair of side plates comprises a groove overlapping the first elastic portion in the second direction, the groove extending in the first direction.

2. The battery module of claim 1, wherein

   each end plate of the pair of end plates comprises a first region below the first elastic portion and a second region above the first elastic portion, and
   a strength of each of the first region and the second region is greater than a strength of the first elastic portion.

3. The battery module of claim 2, wherein each of the pair end plates is welded to the pair side plates in the first region and the second region.

4. The battery module of any one of the preceding claims, wherein a width of the groove is smaller than a thickness of the first elastic portion.

5. The battery module of any one of the preceding claims, wherein a ratio of a thickness of the first elastic portion to a height of each of the pair of end plates is from approximately 0.02 to approximately 0.2.

6. The battery module of any one of the preceding claims, wherein the each end plate of the pair of end plates further comprises a second elastic portion, and wherein the first elastic portion and the second elastic portion are substantially symmetrical to each other with respect to a center line of the each end plate of the pair of end plates, the center line being substantially parallel to the second direction.

7. The battery module of claim 6, wherein the each end plate of the pair of end plates further comprises a third region between the first elastic portion and the second elastic portion.

8. The battery module of any one of the preceding claims, wherein a width of the groove decreases along the first direction as a distance of the groove from the end plate of the pair of end plates increases.

9. The battery module of any one of claims 1 to 7, wherein an end of the groove has a concave round shape.

10. The battery module of any one of claims 1 to 7, wherein an end of the groove extends in a third direction substantially perpendicular to the first direction and the second direction and has a T-shape.

11. A battery module comprising:

a plurality of battery cells arranged in a first direction such that main surfaces of the plurality of battery cells are adjacent to each other; a pair of end plates at outermost sides of the plurality of battery cells; and a pair of side plates coupled to the pair of end plates and covering side surfaces of the plurality of battery cells, wherein:

each end plate of the pair of end plates comprises a first elastic portion extending across the each end plate in a second direction substantially perpendicular to the first direction,

the each end plate of the pair of end plates comprises a first region below the first elastic portion and a second region above the first elastic portion, and a strength of each of the first region and the second region is greater than a strength of the first elastic portion.

12. The battery module of claim 11, wherein:

the each end plate of the pair of end plates further comprises a second elastic portion, and the first elastic portion and the second elastic portion are substantially symmetrical to each other with respect to a center line of the each end plate of the pair of end plates, the center line being substantially parallel to the second direction.

13. The battery module of claim 12, wherein each end plate of the pair of end plates further comprises a third region between the first elastic portion and the second elastic portion.

14. The battery module of any one of claims 11 to 13, wherein the each end plate of the pair of end plates is welded to the pair of side plates in the first region and the second region.

15. The battery module of any one of claims 11 to 14, wherein a ratio of a thickness of the first elastic portion to a height of the end plates is from approximately 0.02 to approximately 0.2.

FIG. 1

100

20

10

61 { 61b
61x
61a

63

A

z
x
y

EP 4 734 198 A2

# FIG. 2

# FIG. 3

# FIG. 4

# FIG. 5

## FIG. 6

FIG. 7

EP 4 734 198 A2

FIG. 8

# FIG. 9

# FIG. 10

FIG. 11